# EUROPEAN PATENT APPLICATION

(11) **EP 4 180 133 A1**
(43) Date of publication of application: **17.05.2023**
(21) Application number: 21208367.9
(22) Date of filing: 16.11.2021
(51) Int. Cl.: B05B 13/04, B05B 15/33, B41J 3/407, B05B 7/24

(54) **A MARKING SYSTEM FOR A ROBOT**

(71) Applicant: HILTI Aktiengesellschaft, 9494 Schaan (LI)
(72) Inventor: Lukic, Sasha, 9470 Buchs (CH); Halvorsen, Håvard, 6856 Sogndal (NO); Jakobsen, Yngve, 6856 Sogndal (NO)
(74) Representative: Hilti Aktiengesellschaft Corporate Intellectual Property

(57) **Abstract**

A marking system (1) for a robot (2), comprising, a paint container (12) configured to store a paint for marking, a head (10) for spraying or printing the paint, a hose (13) for delivering the paint to the head (10), said hose (13) comprising a first end (131) being connected the head (10) and a second end (132) being inserted into the fluid container (12), and a negative pressure device (14) for extracting the paint from the paint container (12) into the hose (13), a guiding device (3) being received in the paint container (12), said guiding device (3) being configured to keep the second end (132) of the hose (13) being in contact with the paint regardless of the paint container's orientation. With such a guiding device (3), the marking system (1) for a robot (2) can work well even the paint container (12) is moved and/or rotated.

## Description

### TECHNICAL FIELD

The present invention relates to a marking system. The present invention also relates to a marking system for a tool, especially for a robot used in construction field.

### BACKGROUND

The marking system and printing on the concrete are common tools. Typically, a marking system includes printing head and paint container. Paint container is stationary, while printing head moves, or object are moved in front of printing head.

Problem with this kind of marking system is usage by construction robots because paint container has to be located stationery and printing head is attached to the robot arm. Usually, such a container needs to stand upright, so that the fluid paint can flow out of the container. It makes long path for paint flowing and creates problems with robot arm manipulation. Besides from that, for a robot, there is a need to implement a tool changer. For example, the end effector of the robot may be changed from e. g. a drilling machine to the printing device and vice versa. If the paint container is mounted on a mobile platform, then you would have to connect or disconnect a hose or the like to the (moveable) printing device, which would be very complicated. Moreover, paint in the hose could then dry out which would further complicate things.

However, if the paint container is mounted on the robot arm, the paint container is moved and may be turned around and even upside-down, depending on whether the paint is to be printed or sprayed on a ceiling or wall or a floor. Due to the movement or rotation of the paint container, the paint follows gravity force, and if the hose inside paint container is not on the lower position, the paint can't flow out. Therefore, a usual paint container would not work when it would be moved or rotated, e. g. on a robot.

### SUMMARY OF THE INVENTION

It is an object of the present invention to provide a marking system for a robot that the paint can flow out of the paint container regardless of the paint container's orientation.

Another object of the present invention is to provide a marking system for a robot that there is simple interface for fluid paint, avoiding the paint to dry fast and to cause paint jamming.

The present invention provides a marking system for a robot, comprising, a paint container configured to store a paint, a head for spraying or printing the paint, a hose for delivering the paint to the head, said hose comprising a first end being connected the head and a second end being inserted into the fluid container, and a negative pressure device for extracting the paint from the paint container into the hose, a guiding device being received in the paint container, said guiding device being configured to keep the second end of the hose being in contact with the paint regardless of the paint container's orientation. With such a guiding device, the marking system for a robot can work well even the paint container is moved or rotated.

In an advantageous configuration of the marking system according to the invention it is provided that said guiding device is attached to the second end of the hose and moves the second end of the hose by gravity. By following the gravity force, the guiding device attached to the second end of the hose will guide the second end of the hose below the horizontal level of the paint in the paint container, since the paint will also flow to the lower position of the container by gravity force.

In another advantageous configuration of the marking system according to the invention it is provided that said guiding device is a mass, the hose inserting into the hose, and the weight of said mass is higher than the highest buoyance of the paint stored in the paint container. Such a guiding device is a simple and effective solution to use a gravity force to keep the second end of the hose being in contact with the paint always.

In yet another advantageous configuration of the marking system according to the invention it is provided that the marking system is configured to being an end effector of the robot. This allows the marking system to be designed as robot end effector tool that is able to mark at any position in space without problem of not getting paint in the hose. One more benefit is a short path between paint container and spraying nozzle on the head, so that it is faster to start spraying, lower probability of jamming, and better maintenance.

Preferably, the robot comprises a tool arm, which is movable and/or rotatable. The marking system is configured to being attached to and/or released from the tool arm of the robot. With this solution, the robot is able to implement a tool exchange. The marking system can be detached and/or picked up by robot with tool changing system.

Preferably, the paint container is a cylinder shape or rectangular shape. Such a regular cylinder shape or rectangular shape of the paint container will help the paint flow out of the paint container smoothly, moreover, the regular cylinder or rectangular shape of the container is also easy to manufacture and set up the hose in the paint container.

In yet another advantageous configuration of the dispenser according to the invention it is provided that the hose includes a straight portion formed by hard and non-bendable material and a bending portion formed by soft and bendable material, said straight portion being connected to said bending portion with a rotatable connector. Hereby, the soft and bendable portion will be bended toward to the lower position inside of the paint container while the paint flow toward the lower position inside of the paint container, too, when the container is moved or rotated with the movement of the arm of the robot.

Preferably, the length of the straight portion is substantially equal to the length of the bending portion. Hereby the second end of the hose can reach to any plane or corner inside of the container, even the top wall of a cylinder or rectangular shape of the container when it is in upright position. For example, the container is rotated 180 degrees, the soft and bendable portion will bend from connection of the straight portion toward to the top wall of the container.

Alternatively, said hose is formed by soft and bendable material. The whole length of the hose is formed by soft and bendable material. Hereby, no need of the straight portion, the hose is bendable. The soft bendable material shall be adapted to the size of the paint container. Preferably, the material of the hose shall allow arc bending, but prevent pinching of the hose.

Preferably, said tool container includes a top face, an opposite bottom face, at least one side face connecting the top face and bottom face, and a central axis substantially perpendicular to the top face and bottom face. Said hose is positioned offset to the central axis of the paint container. More preferably, said hose is positioned close to the side face of the painter container. Hereby, the hose in the container could be bended toward the lower position inside paint container always.

### BRIEF DESCRIPTION OF THE DRAWINGS

Further features and advantages of the invention are described in greater detail hereinafter by means of an embodiment by way of example with reference to the drawings. In the Figures:
FIG. 1 illustrate an embodiment of the marking system of FIG. 1 attached to a robot.
FIG. 2 is a schematic view of an embodiment of a marking system for the robot.
FIG. 3 is a schematic view of an embodiment of the marking system rotated 90 degrees.
FIG. 4 is a schematic view of an embodiment of the marking system rotated 180 degrees.

In the drawings, like reference numerals are used to indicate like parts throughout the various views.

### DETAILED DESCRIPTION

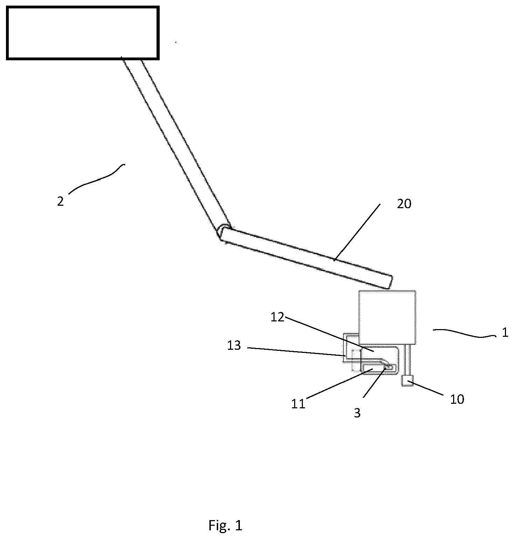

As shown in FIG. 1, a marking system 1 is for a robot 2. The robot 2, for example, is a robot which is used in construction field that helps add more productivity to the construction projects. This innovative construction robot can take over installation execution, while allowing the workers to track project progress and status through data. Using digital plans, the robot marks and drills holes, relieving construction workers from the strenuous task of overhead drilling and allowing them to focus on operation of the construction robot. The robot 2 includes a tool arm 20, which can move or rotate as the robot's set to preform various of functions. An end effector is a tool, device or process sub-system attached to the end of a robot arm. End effectors are specially designed to interact with the working environment in which the robot operates. The tool and its programming depend on the project the robot is accomplishing. For example, the robot 2 can perform marking onto the concrete, such as, ceiling, wall, or floors, with a painting end effector tool connected to the end of the robot arm 20. A typical end effector attached to a robot used in manufacturing usually only accomplishes one repetitive task with a single end effector however by adding tool changers, robot 2 can change to different end effectors and do other tasks.

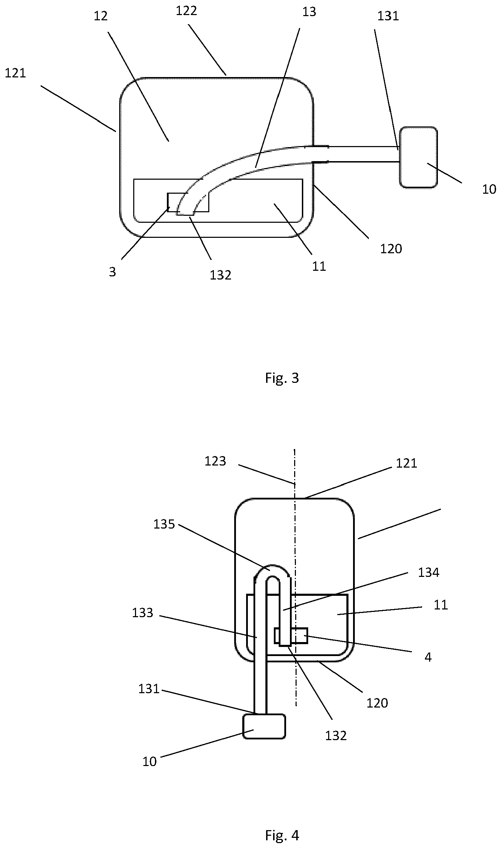

Refer to Figs. 1 -4, the marking system 1 for the robot 2 according to the present invention is a type of end effector attached to the end of the robot arm 20. The marking system 1 comprises a head 10 for printing or spraying a paint 11, a hose 13 for delivering the paint to the head 10, a paint container 12 for storing the fluid paint 11, and a negative pressure device 14 which help the paint as a fluid flowing out of the container into the head, and then spaying or injecting from the head to the point or place to be marked. The paint 11 is a kind of color fluid, which can be used for marking on the concrete or other surface. For example, the paint 11 can be any of the ink, pigment, oil paint, coloring agent, and so on.

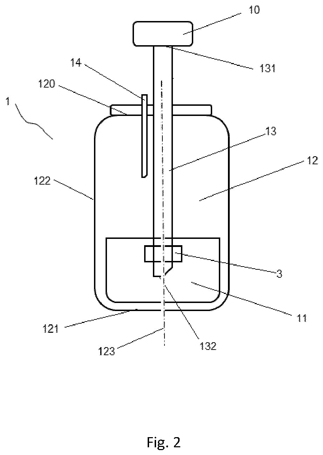

As it is well known in the arts, the negative pressure device 14 is a device for leveraging the air pressure in the painter container 12. For example, the negative pressure device 14 could be formed as a second pipe parallel to the hose 13, as shown in Fig. 2 (not shown in Fig.1, 3 and Fig. 4). A higher air pressure than the normal pressure imported into the paint container 11 through the second pipe so that the paint 11 would flow out of the container 12 through the hose 13 due to the higher air pressure.

The hose 13 has two opposite ends. A first end 131 is connected to the head 10 and a second end 132 opposite to the first end is inserted into the paint container 12. The hose 13 works as a flow path, which delivers the paint 11 or color fluid in the paint container 12 to the head 10. As what mentioned before, the negative pressure device 14 is used for leveraging air pressure, so that the paint 11 in the container 12 could flow out of the container 12 though the hose 13 to the head 10.

According to an embodiment of the invention, the marking system 1 is an end effector of the robot 2. The marking system 1 is configured to connect and/or disconnect to the end of the tool arm 20. This enables creation of marking end effector tool with container as it's integral part. Preferably, the marking system 1 further comprise hardware for interacting with the robot. For example, the hose 13 that paint is flowing through, and negative pressure device 14 for pressure are both connected to the hardware, while the hardware is connected to the robot. The hardware could put some pressure in the paint container so that the paint can move. Moreover, the hose 13 does not need a long path since the paint container 12 and the head 10 are both parts of the end effector. Hereby, the marking system is a separate device for the robot 2, which is able to mark at any position in space without problem of not getting paint in hose, reducing the risk of the paint 11 in the hose 13 being dried out.

The marking system 1 is able to be picked up and parked by robot with tool changing system. For example, the working device can be changed from e. g. a drilling machine to the marking system and vice versa, no need of connecting or disconnecting the hose 11 or the like to the moveable marking system, highly improving the working efficiency and applicability of the robot 2. Moreover, such a marking system will not conflict with the robot arm manipulation. There is a guiding device 3, received in the paint container and attached to the second end 132 of the hose 11. Said guiding device is configured to keep the second end 132 of the hose 11 being in contact with the paint 11 regardless of the paint container 12's orientation.

Preferably, the guiding device 3 move the second end 132 of the hose 11 by gravity force. As the paint 11 is stored in the container as a fluid, when the container 12 is rotated or moved, the paint 11 will flow toward the lower position inside the container 12 due to the gravity. The second end 132 of the hose 13 is also moved by the guiding device, therefore the second end 132 of the hose 13 is always keeping in contact with the fluid paint.

According to a preferred embodiment of the invention, the guide device 3 is a mass, and the weight of said guiding device 3 is higher than the highest buoyance of the paint stored in the paint container. By following the gravity force, the mass attached to the second end of the hose will guide the second end of the hose below the horizontal level of the paint in the paint container, as the paint will also flow to the lower position of the container by gravity force. As the weight of the mass is higher than the highest buoyance of the painted stored in the paint, even if the paint is full of the container, the mass can still guide the second end 132 of the hose 12 to the bottom of the fluid paint. The mass shall be adapted based on the size/shape of the paint container and the density of the fluid paint, as well as the material of the soft bendable hose. Anyway, such a guiding device bring a simple and effective solution to use a gravity force to make sure the second end of the hose being in contact with the paint always, moreover, this solution will not waste any paint in the container and ensure the marking system can work well all the time.

The hose 13 is formed by soft and bendable material. Preferably, the whole length of the hose is formed by soft and bendable material. Hereby, the hose in the container could be bended toward the lower position insider of the container always.

Preferably, the paint container 12 is a cylinder shape or rectangular shape. Such a regular cylinder shape or rectangular shape of the paint container 12 will help the paint flow out of the paint container smoothly, moreover, the regular shape of the container is also easy to manufacture and set up the hose in the paint container.

More preferably, the paint container 12 includes a top face 120, a bottom face 121 opposite to the top face , at least one side face 122 extending between the top face 120 and bottom face 121, and a central axis 123 substantially perpendicular to the top face and bottom face. According to one preferred embodiment, the hose 13 is positioned offset to the central axis 123 of the tool container. More preferably, said hose is positioned close to the side face 122 of the painter container 12. Thus, there is more space for bending of the hose in the paint container, to avoid the possibility of pinching of the soft hose.

According to yet another preferred embodiment of the invention, the hose 13 includes a straight portion 133 formed by hard and non-bendable material and a bending portion 134 formed by soft and bendable material, said straight portion 121 being connected to said bending portion with a rotatable connector 135. The connector 135 could be bent to an arc shape. Hereby, the soft bending portion 135 will be bended toward to the lower position inside of the paint container while the paint flow toward to the lower position inside of the paint container, too, when the container is moved or rotated with the movement of the arm of the robot.

Preferably, the length of the straight portion 133 is substantially equal to the length of the bending portion. By following the gravity force, the bending portion 134 will bend around the connector 135. The straight portion 133 and bending portion 134 have the same length so that the second end 132 of the hose 13 can reach to any plane or corner inside of the container, even the top face of a cylinder or rectangular shape of the container when it is in upright position. For example, the container is rotated 180 degrees, the soft and bendable portion will bend from the rotatable connector 135 toward the top face 120 of the container.

The material for the hose shall be selected based on the paint 11. Ideally, the material for forming the hose is to have top of hose always at the bottom of the paint container. Therefore, bendable portion can be the part of hose or whole hose that is inside paint container. Important for hose material is that with bending it doesn't pinch the hose so that fluid is blocked. The hose is made of soft bendable material that was adapted to the size of the container. The material of hose allowed arc bending, but prevent a sharp bending or pinching, even stacking, which may cause the paint blocked. The weight and/material of the guiding device is adapted based on material used for hose.

The marking system 1 for a robot 2 according to the present invention provides a special movable paint container with soft hose and a guiding device 3 at the end of the hose. With such a guiding device at the end of a soft and bendable hose, by following gravity force, the end of the hose is always in contact with paint, regardless of the paint container's orientation. In addition, the marking system is designed as robot end effector tool that is able to be detached and picked up by robot with tool changing system. This enables creation of marking end effector of a robot with paint container as it's integral part, that is able to mark at any position in space without problem of not getting paint in hose.

While only selected embodiments have been chosen to illustrate the present invention, it will be apparent to those skilled in the art from this disclosure that various changes and modifications can be made herein without departing from the scope of the invention as defined in the appended claims. Thus, the foregoing descriptions of the embodiments according to the present invention are provided for illustration only, and not for the purpose of limiting the invention as defined by the appended claims and their equivalents.

## Claims

1. A marking system (1) for a robot (2), comprising, a paint container (12) configured to store a paint (11) for marking, a head (10) for spraying or printing the paint, a hose (13) for delivering the paint to the head, said hose (13) comprising a first end (131) being connected the head (10) and a second end (132) being inserted into the paint container (12), and a negative pressure device (14) for extracting the paint (11) from the paint container (12) into the hose (13), **characterized in that** a guiding device (3) is received in the paint container(12), said guiding device (3) being configured to keep the second end (132) of the hose being in contact with the paint (11) regardless of the paint container's orientation.

2. A marking system (1) according to claim 1, wherein said guiding device (3) is attached to the second end (132) of the hose (13) and move the second end (132) of the hose (13) by gravity.

3. A marking system (1) according to claim 2, wherein said guiding device (3) is a mass, and wherein the weight of said guiding device (3) is higher than the highest buoyance of the paint (11) stored in the paint container (12).

4. A marking system (1) according to claim 3, wherein the second end (132) of the hose (13) is inserted a through hole of the mass.

5. A marking system (1) according to any of claims 1 to 4, wherein the marking system (1) is configured to being an end effector of the robot (2).

6. A marking system (1) according to claim 5, wherein said robot (2) comprises a tool arm (20) which is movable and/or rotatable.

7. A marking system (1) according to claim 6, wherein the marking system (1) is configured to being attached to and/or released from the tool arm (20) of the robot (2).

8. A marking system (1) according to claim 1, wherein the paint container (12) is a cylinder shape or rectangular shape.

9. A marking system (1) according to any of the preceding claims 1 to 8, wherein said hose (13) includes a straight portion (133) formed by hard and non-bendable material and a bending portion (134) formed by soft and bendable material, said straight portion (133) being connected to said bending portion (134) with a rotatable connector(135).

10. A marking system (1) according to claim 9, wherein the length of the straight portion (133) is substantially equal to the length of the bending portion (134).

11. A marking system (1) according to any of the preceding claims 1 to 8, wherein said hose (13) is formed by soft and bendable material.

12. A marking system (1) according to any of the preceding claims 1 to 11, wherein said tool container (12) includes a top face(120), an opposite bottom face (121), at least one side face (122) connecting the top face (120) and the bottom face(121), and a central axis (123) substantially perpendicular to the top face (120) and the bottom face (121), wherein said hose (13) is positioned offset to the central axis (123) of the paint container (12).

13. A marking system (1) according to claim 12, wherein said hose (13) is positioned close to the side face (122) of the painter container (12).
